# EUROPEAN PATENT APPLICATION

(11) **EP 0 949 596 A2**
(43) Date of publication of application: **13.10.1999**
(21) Application number: 99200970.4
(22) Date of filing: 30.03.1999
(51) Int. Cl.: G07F 19/00, G07F 7/08, G06F 17/60

(54) **Method and system to perform electronic value exchange and settlement among heterogeneous payment schemes with heterogeneous currencies**

(30) Priority: 30.03.1998 US 79801 P; 29.03.1999 US 280090 P
(71) Applicant: CITIBANK, N.A., New York, New York 10043 (US)
(72) Inventor: Golvin, Charles, Los Angeles CA 90064 (US); Katis, Thomas, New York NY 10019 (US)
(74) Representative: Hynell, Magnus

(57) **Abstract**

A method and system to perform electronic value exchange and settlement among heterogeneous payment schemes with heterogeneous currencies. The method and system simultaneously enable electronic value exchange and denomination conversion. In an electronic exchange, the method and system determine the payment scheme and currency required, then make any required conversions to meet the requirements.

## Description

This application claims priority to applicants' copending provisional application entitled "METHOD TO PERFORM ELECTRONIC VALUE EXCHANGE AND SETTLEMENT AMONG HETEROGENEOUS PAYMENT SCHEMES WITH HETEROGENEOUS CURRENCIES" having U.S. Serial Number 60/079,801 filed March 30, 1998.

### FIELD OF THE INVENTION

The present invention relates generally to methods and systems for performing electronic value exchange and settlement.

### BACKGROUND

There are multiple new electronic payment schemes and currencies that are being developed. Some of these have focused more directly toward the physical world, such as the use of smart cards, while others are focused more directly toward the internet. These schemes and currencies are being devised primarily for closed systems, that is, they are not devised for interoperability. The electronic payment world, in effect, is being segregated into various electronic value exchange schemes as these schemes are being piloted and tested in different countries, utilizing different currencies. Furthermore, even within existing single value exchange systems, there may be multiple, non-interoperable schemes sharing the same brand name.

Therefore, there is a need for a method and system to perform electronic value exchange and settlement among heterogeneous payment schemes with heterogeneous currencies.

### SUMMARY OF THE INVENTION

It is an advantage of the invention to meet these needs, and others, through a method and system to perform electronic value exchange and settlement among heterogeneous payment schemes with heterogeneous currencies. This method and system simultaneously enable electronic value exchange and denomination conversion. In an electronic exchange, the invention determines the payment scheme and currency required, then makes any required conversions to meet the requirements.

The method and system of the present invention comprises a number of steps and components. The first step and component, designated as EX, is a method and system of performing value exchange and settlement between multiple payment schemes that are denominated in a single currency. The term "currency," as used herein, means any unit representing value. "Currency" is not limited to an open system of official national banking units of a particular country, but may include any closed currency that is not recognized across national boundaries, such as frequent flyer miles, loyalty points or any other measure of value. The term "payment scheme," as used herein, means exchanging value whether within a particular currency or among different currencies. Payment schemes are any methods of making electronic payments, including, but not limited to Mondex, eCash, Visa Cash and Cyber Coin. From the consumers' point of view, they are holding the equivalent of a national currency, but in reality they are holding a separate currency that is exchangeable with the national currency.

Another component of the present invention, designated as FX, is a method and system for performing value exchange and settlement within a single payment scheme for multiple currencies. For example, there is an electronic payment scheme called "A." "A" works in both German Marks as well as in U.S. dollars. A U.S. consumer who has been issued some "A's" denominated in U.S. dollars by an issuing party wants to buy something from a German merchant who only accepts "A's" denominated in German Marks. The present invention allows the U.S. customer with U.S. dollar "A's" to pay the merchant who only accepts German Mark "A's."

Yet another component of the present invention, designated as EFX, is a method and system for performing value exchange and settlement between multiple payment schemes in multiple currencies. This component combines the capabilities of the EX and FX components.

An object of the present invention determines the protocol being used at both ends of a transaction, and thereby determines the payment scheme and currency used at the respective ends. Finally, the present invention performs a conversion so that each end of the transaction is debited and credited in their respective payment scheme and currency.

The method and system of performing electronic value exchange and settlement among heterogeneous payment schemes with heterogeneous currencies, according to an embodiment of the present invention, is provided primarily, though not exclusively, via a network, such as, the internet. Furthermore, the method and system essentially involves an intermediary, though not always the case, that will assume the role as the "acting merchant" and/or the "acting consumer" in any one transaction. For example, if a U.S. consumer possessing a payment scheme X denominated in U.S. dollars wishes to buy something from a German merchant who only accepted the payment using payment scheme Y denominated in German Marks, the invention includes providing for an intermediary that would essentially become the "acting merchant" for the consumer and the "acting consumer" for the merchant, allowing each party to deal only in their respective scheme and currency.

To achieve the stated and other objects of the present invention, as embodied and described below, the invention includes a method for conducting an electronic transaction, comprising: receiving a payor value type selection for the electronic transaction from a payor; determining a payee value type selection and a payee payment; calculating a payor payment equivalent to the payee payment; receiving the calculated payor payment from the payor; and paying the payee payment to the payee.

To achieve the stated and other objects of the present invention, as embodied and described below, the invention includes a system for conducting an electronic transaction, comprising: a first terminal receiver for receiving a payor value type selection for the electronic transaction from a payor; a server connected to the first terminal receiver, the server including: a calculator for calculating a payor payment equivalent to the payee payment; and a processor for determining a payee value type selection and a payee payment and for initiating payment of the payee payment to the payee; and a second terminal receiver connected to the server for receiving the calculated payor payment from the payor.

To achieve the stated and other objects of the present invention, as embodied and described below, the invention includes a method for conducting an electronic transaction, comprising: receiving a value of a first value type; receiving a selection of a second value type; converting the value of the first value type to an equivalent value of the second value type; and providing the equivalent value of the second value type.

Additional objects, advantages and novel features of the invention will be set forth in part in the description that follows, and in part will become more apparent to those skilled in the art upon examination of the following or upon learning by practice of the invention.

### BRIEF DESCRIPTION OF THE FIGURES

In the drawings:
FIG. 1 represents a value exchange and settlement system incorporating the EX, FX, and EFX components in accordance with an embodiment of the present invention;
FIG. 2 represents an embodiment where the seller and intermediary are associated;
FIG. 3 represents an embodiment where the buyer seeks an intermediary independent of the seller;
FIG. 4 represents an embodiment where the sales transaction is characterized as a point of sale transaction;
FIGS. 5-8a outline the process for an embodiment of the present invention;
FIG. 9 represents an initial screen for an embodiment of the present invention;
FIG. 10 represents a screen for an embodiment of the present invention allowing the user to select the desired payment scheme and currency;
FIG. 11 represents a screen for an embodiment of the present invention which allows the user to review foreign exchange rate information that may impact the user's selection of payment scheme and currency; and
FIG. 12 represents a screen for an embodiment of the present invention summarizing the completed transaction.

### DETAILED DESCRIPTION

Reference will now be made in detail to the presently preferred embodiments of the invention, one or more examples of which are illustrated in the accompanying drawings. Each example is provided by way of explanation of the invention, not as a limitation of the invention. It will be apparent to those skilled in the art that various modifications and variations can be made in the present invention without departing from the scope or spirit of the invention. For instance, features illustrated or described as part of one embodiment can be used on another embodiment to yield a still further embodiment. Thus, it is intended that the present invention cover such modifications and variations as come within the scope of the appended claims and their equivalents.

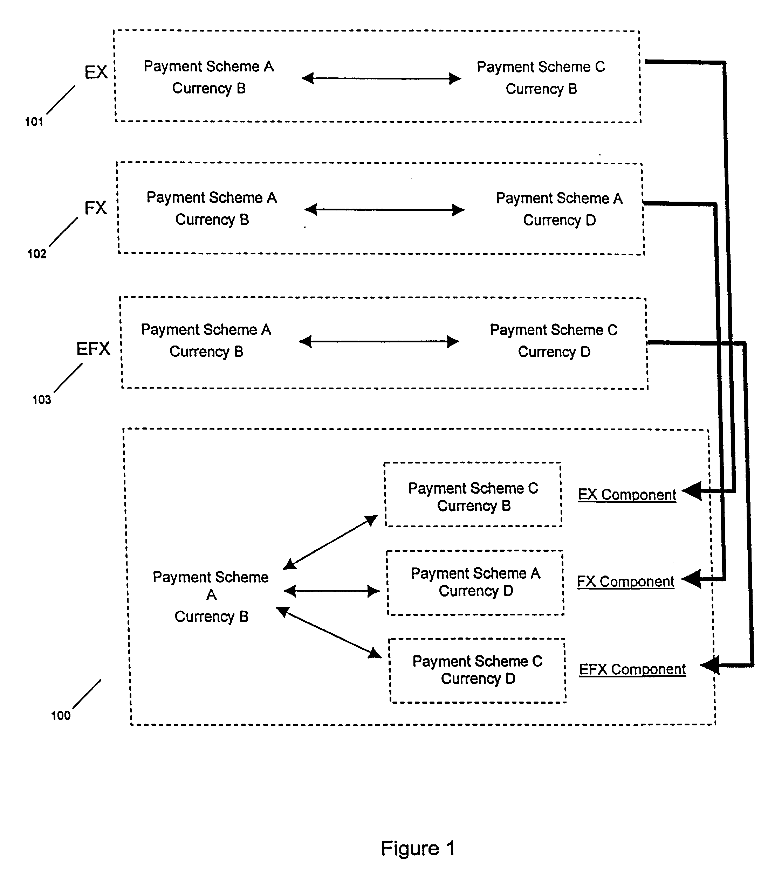

An embodiment of the method and system of the present invention comprises a number of components (see FIG. 1, element 100). The first component 101, designated as EX, is a method of performing value exchange and settlement between multiple payment schemes that are denominated in a single currency. The term "currency," as used herein, means any unit representing value. "Currency" is not limited to an open system of official national banking units of a particular country, but may include closed currency that is not recognized across national boundaries, such as frequent flyer miles or loyalty points. The term "payment scheme," as used herein, means exchanging value within a particular currency or among different currencies. The term "value type" is meant to include "payment scheme" and/or "currency." Payment schemes are methods of making electronic payments, such as Mondex, eCash, Visa Cash and Cyber Coin. This list is not intended to be limiting, but includes other payment schemes, as well as, a number of other micropayment schemes which have been or are about to be introduced into the market. From the consumer's point of view, with the present invention, the consumer is holding the equivalent of a national currency, but the consumer is really holding a separate currency that is exchangeable with the national currency.

Another component 102 of the present invention, designated as FX, is a method of performing value exchange and settlement within a single payment scheme for multiple currencies, including foreign exchange. For example, there is an electronic payment scheme called "A." "A" works in both German Marks as well as in United States dollars. A United States consumer who has been issued some "A's" by an issuing party wants to buy something from a German merchant who only accepts German Mark "A's." The present invention allows the United States customer, the payor, with United States dollar "A's" to pay the merchant, the payee, who only accepts German Mark "A's."

Yet another component 103 of this embodiment, designated as EFX, includes a method of performing value exchange and settlement between multiple payment schemes in multiple currencies. This component combines the capabilities of the EX and FX components.

An embodiment of the present invention determines the protocol being used at both ends of a value exchange transaction. The present invention senses the origin of each end of the transaction, thereby determining the payment scheme and currency used at the respective end. Finally, the present invention performs a conversion so that each end of the transaction is debited and credited in the equivalent payment scheme and currency.

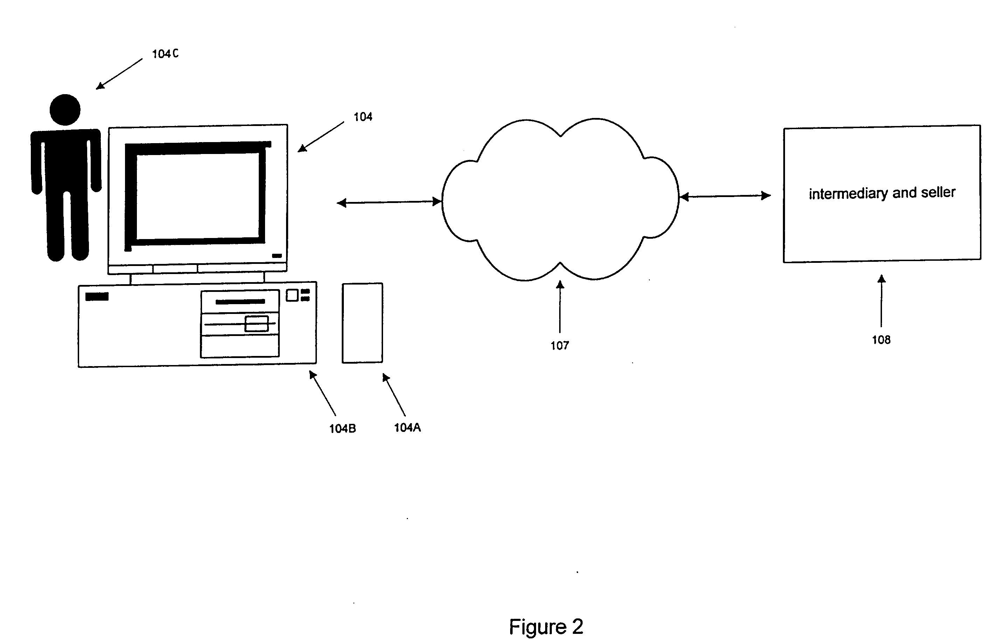

The method and system of the present invention may include a variety of hardware and software depending upon the number of payment schemes utilized. For example, for electronic commerce a terminal 104, such as personal computer (PC), may be utilized (see FIG. 2) by a customer 104C. In addition, for a smart card based system, a smart card reader 104A may be provided at the PC. Also, appropriate software may be installed in the hard drive 104B for an eCash system with a purse. For a network based system, the PC 104 has the capability to access a network 107. Generally, the main components required for a particular system will depend on the type of protocol being utilized.

Although the present invention is applicable to all types of payment schemes, it is important to note that the alternate-cash schemes are different from credit card processing schemes. An embodiment of the present invention is primarily directed to the transfer of value electronically, and most of these schemes are based on a script or token based system.

The process involved in this embodiment is largely server based and network based, and as a result, there is not a lot of code on the seller's side. The majority of the service in this embodiment is primarily located at the intermediary's network servers. Therefore, the value exchange and settlement is a service that the intermediary provides, and it is not simply software that is left with a merchant at the merchant's end. The intermediary essentially becomes the merchant for the consumer, and the intermediary becomes the consumer for the merchant in a number of ways. That is, an intermediary steps in and accepts the payment scheme and currency that the merchant is not willing to accept, and presents the payment scheme and currency to that merchant that the consumer would not have otherwise been able to present.

Another embodiment of the present invention allows the ability to make a market in the exchange of value, with many of the concepts available in the stock market today, available at the point of purchase. For example, it would be possible to place an order to a product using payment scheme A denominated in currency B to a merchant accepting payment scheme C denominated in currency D, but only should the efx rate achieve a value of X. The variables here could also be in the EX domain. One might consider using payment scheme I or J with the merchant accepting payment scheme K, depending on the ex rate for I or J respectively.

A further embodiment of the present invention includes coupons as a form of payment.

One embodiment of the present invention involves a buyer 104c at terminal 104, such as a PC, and a seller and an intermediary 108. Furthermore, the interaction between these parties may occur over a network 107, such as the internet, where the buyer 104C accesses the seller's web page. The nature and form of the interaction between the three parties may vary, for example, depending on how tightly integrated the intermediary becomes with the seller. For instance, if a seller associates itself with an intermediary to facilitate transactions between the seller and a potential buyer 104C, then the value exchange and settlement processed through the intermediary is nearly automatic when the buyer 104 makes a purchase from the seller's web page. For example, if a U.S. consumer tries to pay for something with United States dollars in Visa Cash, the system is automatically invoked and the intermediary automatically becomes part of the transaction and presents the price in United States dollars to the consumer.

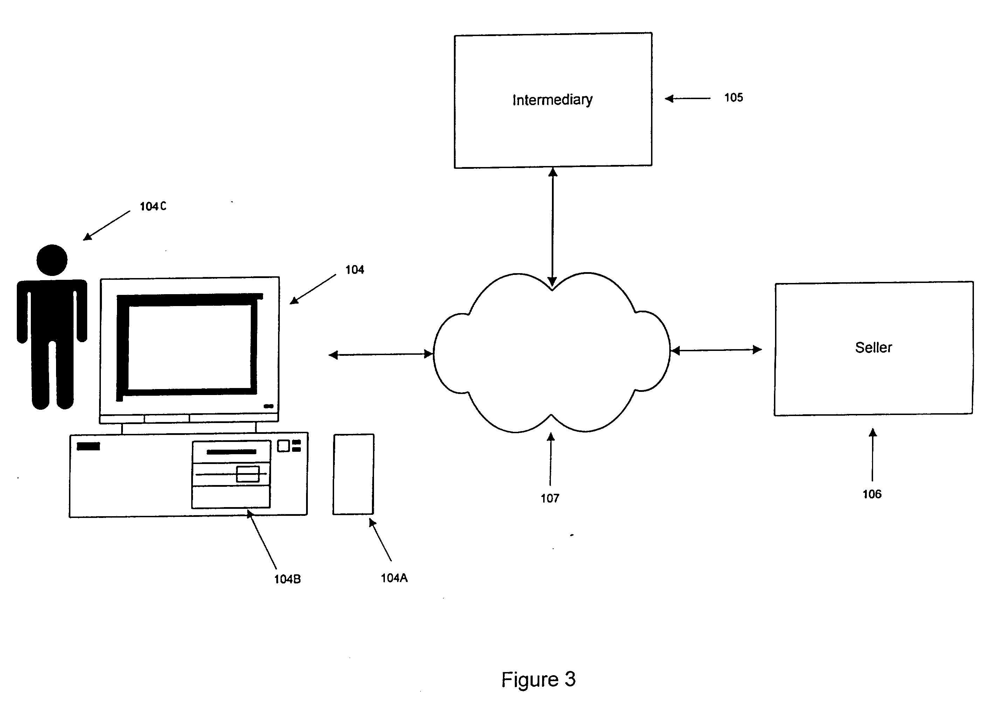

In another embodiment (see FIG. 3), because, for example, there are many internet merchants 106 or electronic commerce merchants 106 who may not have a value exchange and settlement relationship with a particular intermediary 105, a buyer 104C could proactively seek out an intermediary 105 to complete the transaction using a payment scheme and currency not acceptable to the merchant 106. In this instance, the buyer 104C may, for example, launch a web utility and an intermediary 105 is then invited to participate in the transaction and to convert the scripts as appropriate. For example, the consumer could just by being aware that an intermediary offers this service, click on a bookmark or some other means of invoking the service and have the transaction routed through the intermediary 105. The intermediary may then enable the buyer to make the transaction, even though the transaction could not have been completed absent the method and system of the present invention. In effect, the intermediary becomes the consumer to the merchant, transacting business in a payment scheme and currency compatible with the merchant. The intermediary then transacts with the consumer in a payment scheme and currency compatible with the consumer's preference.

Through this interaction, regardless of the way the intermediary has become involved in the process, information from the different parties is exchanged so that the intermediary may present to the buyer 104 the resulting price in a payment scheme and currency acceptable to the buyer 104. And, the payment to the seller 106 is made in a payment scheme and currency acceptable to the seller 106. From the consumer's perspective, the intermediary is essentially acting as an on-line merchant, in the same way that a merchant would have originally translated, for example, Visa Cash value on its own. In this embodiment, the intermediary becomes a merchant across all the different schemes and currencies and is able to transmit those values on behalf of the consumer to other merchants.

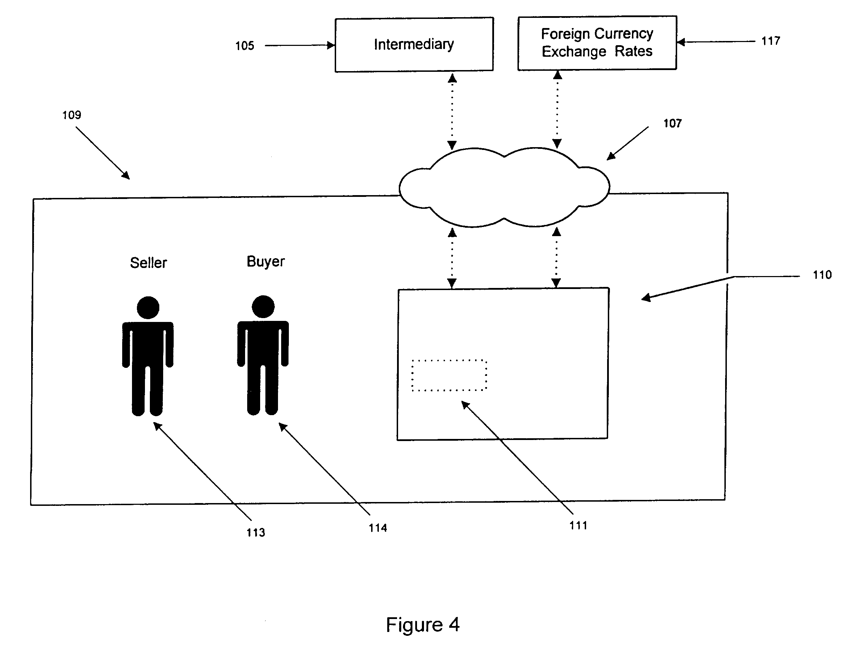

Another embodiment of the present invention is directed to an off-line and/or on-line point of sale application (see FIG. 4). This type of transaction occurs, for example, through the use of a smart card. In this embodiment, a consumer 114 enters a store having the option to conduct a sales transaction with both an off-line system 109 or an on-line system. If the consumer selects the use of an off-line system or if an off-line system is the only system available, the consumer is limited to the available options that are physically present. In order to work in an off-line environment, the system 109 requires a larger piece of software and/or hardware 110 housed at the merchant location, where the off-line merchant performs those transactions. The equipment may include a smart card terminal/reader 111.

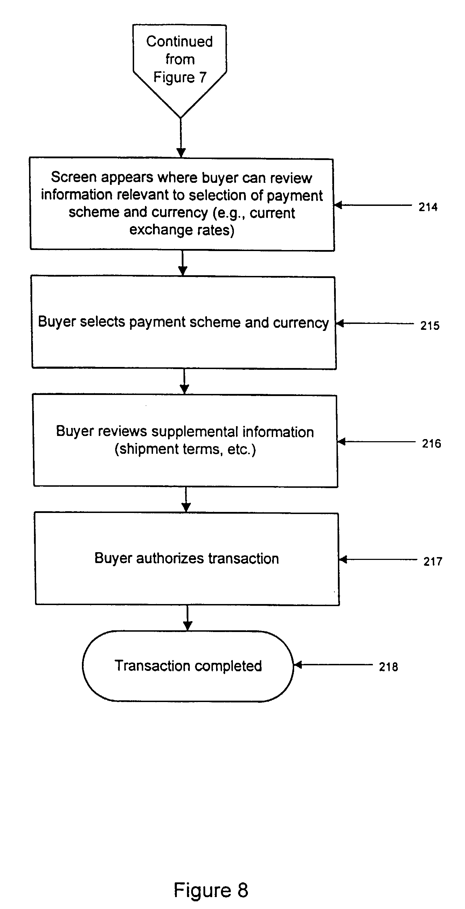

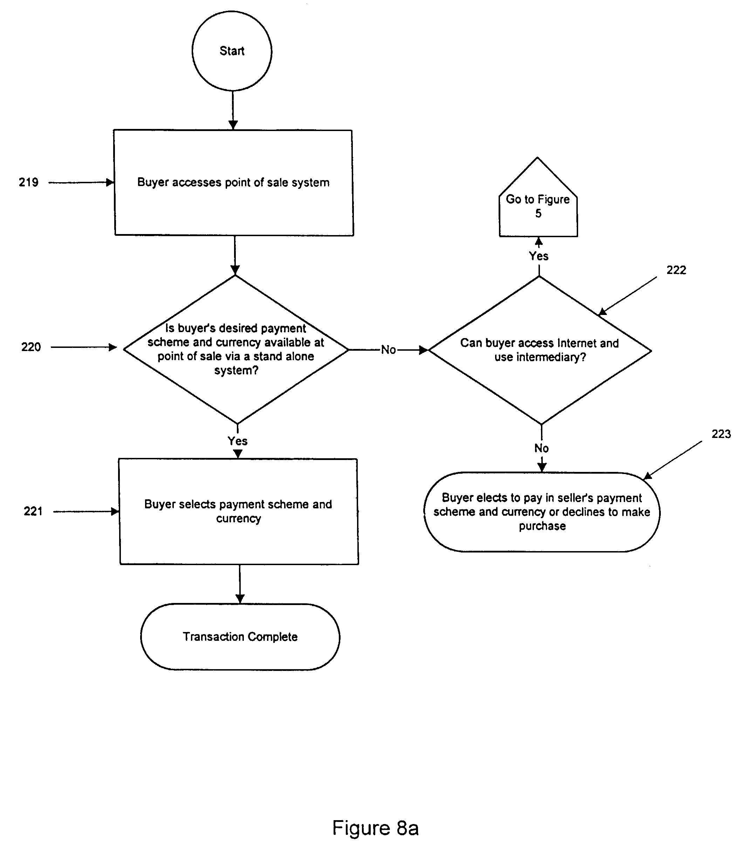

Specifically, in this embodiment, the buyer accesses the system (see FIG. 8A) when physically present at the seller's place of business. Once the buyer accesses the system 219, the buyer is able to determine if the payment scheme and currency the buyer desires to use is available 220. If not, the buyer determines if access to the network is an option from the point of sale terminal 222. If so, the buyer may proceed to contact an intermediary identified at the terminal or contact an intermediary independently. If the buyer does not have the ability to access the intermediary, then the buyer may elect to pay in the seller's payment scheme and currency or decline to make purchase 223.

If the buyer's payment scheme and currency are available at the point of sale terminal, then the buyer selects the payment scheme and currency 221 and completes the transaction.

As shown in FIG. 4, even with a stand alone capable system 109, the smart card terminal/reader 111 may communicate to the internet 107. If a user places the smart card in the smart card terminal/reader 111 and the scheme that the merchant 113 currently accepts is not the same scheme that the consumer 114 prefers, then in an embodiment of the present invention, the terminal 111 connects to the internet 107 and proceeds through the service of the present invention.

Another embodiment includes generic smart card terminals/readers 111 supplied as part of the present invention. This embodiment may bundle schemes like Visa Cash and Mondex with the system.

A merchant may interact with the method and system of the present invention in a variety of ways. One example is that if the merchant desires to associate with an intermediary, the merchant may use an internet available form to establish an association with the intermediary. This embodiment also incorporates a function in which software may be downloaded to the merchant to invoke access to the system.

In accordance with an embodiment of the present invention, from the consumer's perspective, the terminal display, such as a PC monitor, when interacting with the value exchange and settlement system, presents a wide variety of options. For example, there is an ability to customize and alter what and how much information is presented. Furthermore, if foreign currency exchange is involved, the actual foreign exchange rate may be presented.

For example, a German merchant who accepts the Mondex payment scheme presents a price in German Marks when a consumer invokes the service. The intermediary presents the consumer with the price in United States dollars using Visa Cash, and that price could, for example, include the foreign exchange conversion plus additional charges, including any markups or premiums charged by the intermediary to complete the transaction. In addition to the final price presented to the consumer, the actual foreign exchange rate, a markup, and any additional charges above the selling price of the product itself may or may not be shown to the consumer.

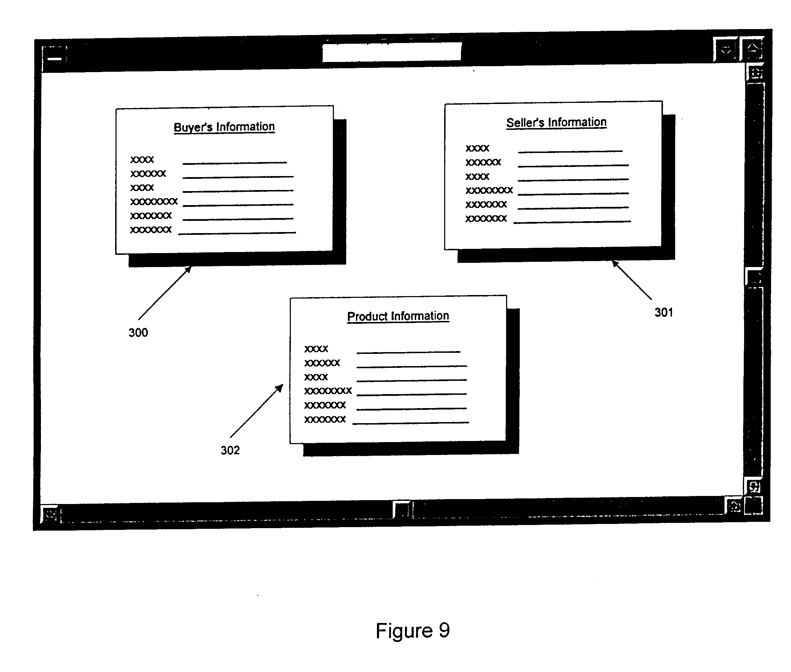

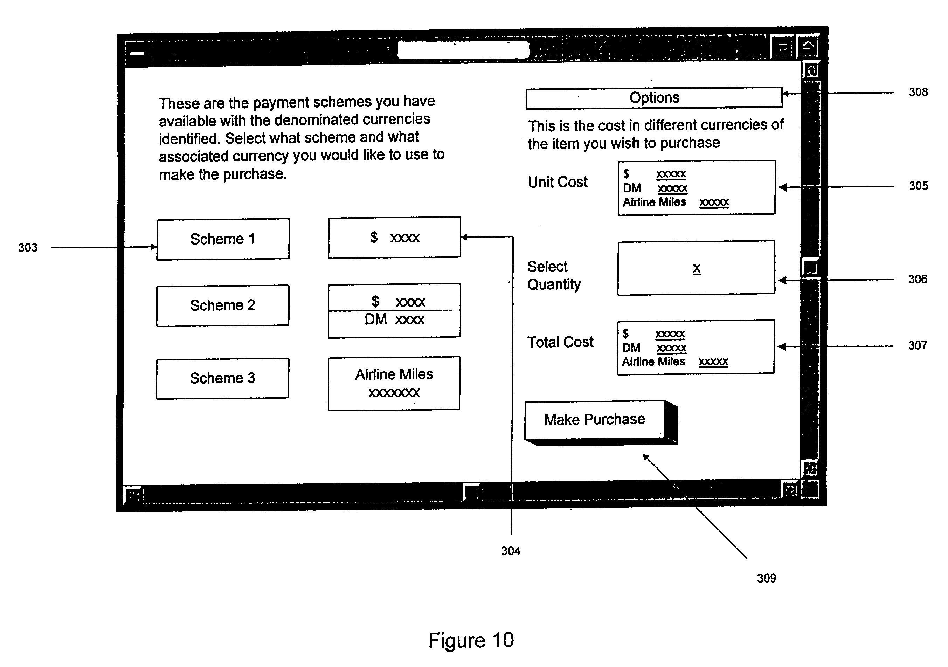

Specifically, in accordance with one embodiment of the present invention that includes a graphical user interface (GUI), if the consumer is, for example, working over the internet, the consumer, initially views a screen (see FIG. 9) with information regarding the buyer 300, seller 301, and product to be purchased 302. Another screen (see FIG. 10) follows that takes the information provided and displays the payment schemes 303 and currencies 304 available. Currency may involve foreign currencies and value units, such as, frequent flier miles. Also, the payment schemes available may present value denominated in multiple currencies.

Furthermore, as shown in FIG. 10, an embodiment of the present invention may involve a screen that also displays the unit cost 305 and total cost 307 of a seller's product denominated in multiple currencies, so that even if the transaction could have been completed using United States dollars, a buyer may select to make the purchase in another currency. The buyer is able to select the quantity 306 to be purchased, and can make the purchase 309 or access more information 308 that the buyer may find beneficial in deciding whether to make the transaction.

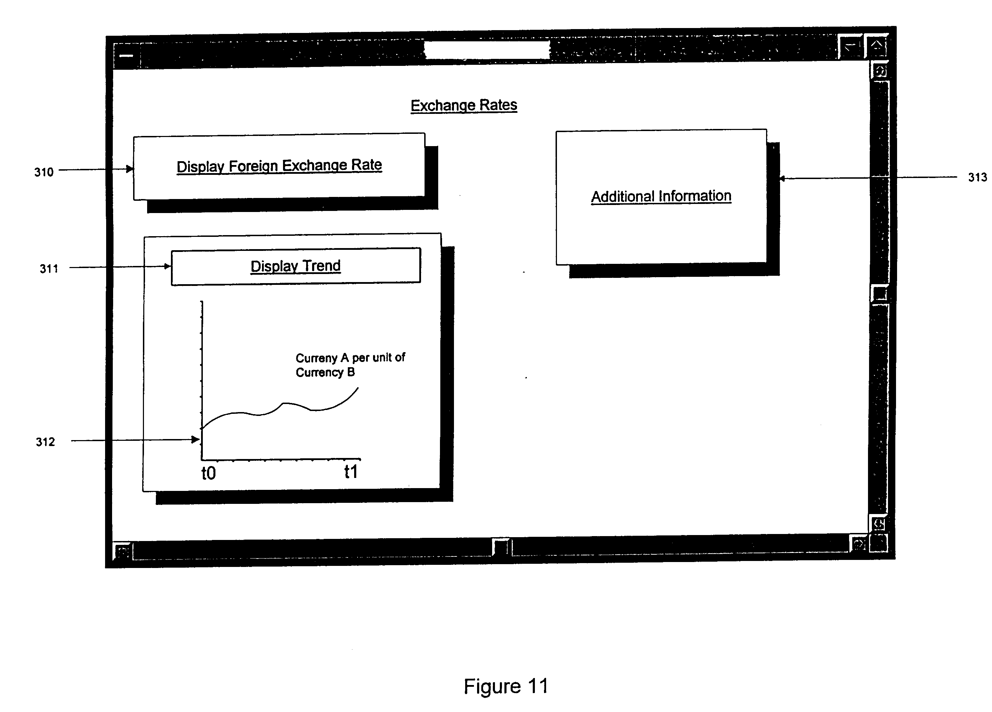

The additional information available to help the buyer make the decision as to whether to make a purchase may include, in an embodiment of the present invention, a screen (see FIG. 11) that displays foreign exchange rate information 310, trends in the exchange rates 311, and a presentation to the buyer of the information in a more visually appealing and simplistic way 312.

In an embodiment of the present invention, other data and information may be presented to the buyer 313. The intermediary can also serve as a conduit for much of the payment interaction in terms of services beyond just the exchange of value and settlement. For example, the intermediary could provide information about the item that is purchased, provide receipts for items or service purchased, and, serve as the conduit by which the product is delivered, if, for instance, the item is a digital good. Acting as an intermediary to help facilitate transactions translates into opportunities for the intermediary to serve countless other roles. Therefore, the focus of the present invention is not limited to value exchange and settlement.

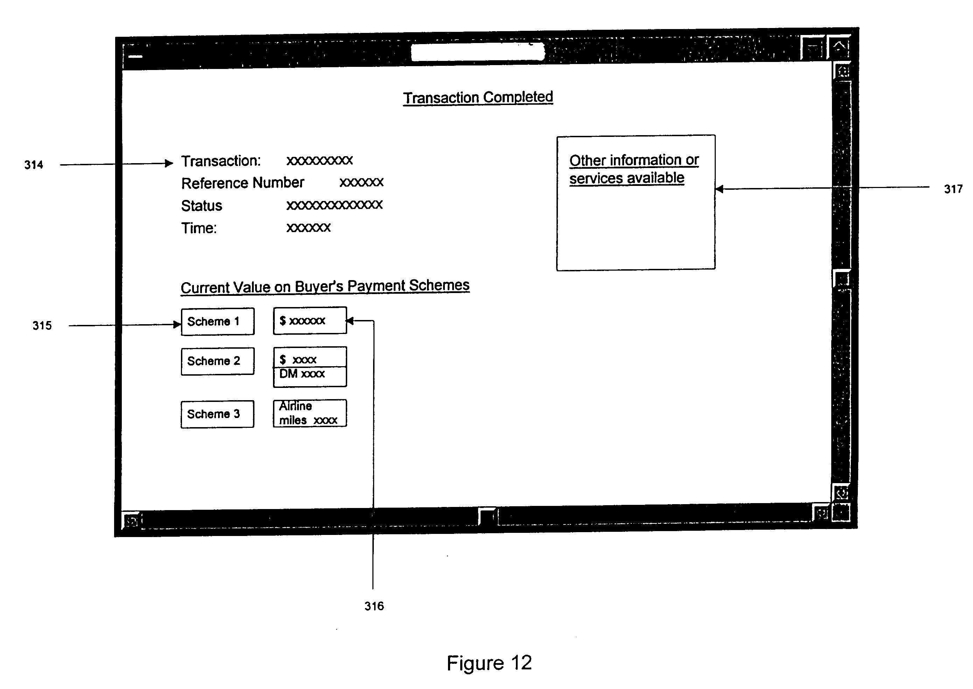

In accordance with an embodiment of the present invention, at the completion of the transaction, a buyer views a screen (see FIG. 12) that summarizes the transaction by providing a description of the completed transaction 314, a reference number, status of the transaction and its effectiveness, and the time the transaction was completed. Furthermore, the screen may present to the buyer the remaining values 316 on the buyer's payment schemes 315. The buyer may access other services 317 that might be of interest to the buyer beyond value exchange and settlement.

The present invention is primarily directed to a smaller scale focused on a micro level, however, it could be applied to a higher level of exchange, such as the exchange of large amounts of currencies, including foreign currencies and non-national currencies, across corporate bank products. The present invention may also enable a consumer to maintain only one currency and one scheme, knowing that the invention provides a service that enables purchases at virtually any merchant that accepts any type of electronic currency. And, this being provided at a relatively low transaction cost.

As noted above, the term currency includes frequent flier miles and loyalty points. As to frequent flier miles and loyalty points used as currencies, there are some differences. The currencies such as frequent flier miles are generally proprietary currencies, and not sovereign currencies. So the rules regarding them are different, and the intermediary would need to be working within the constraints of the rules set by the owners of these currencies. There will either be merchant interaction, but probably more importantly the intermediary will be working with the owner of that currency so, if, for example, the intermediary is going to be exchanging frequent flier miles as part of a value exchange transaction, then the intermediary may need to be working with the respective airline to make sure that the intermediary is conducting the transaction in accordance with the requirements established by the airline. These requirements may deal with how that currency, frequent flier mileage, should be managed, and what type of exchange should be allowed. The airline may not desire full convertibility of those miles.

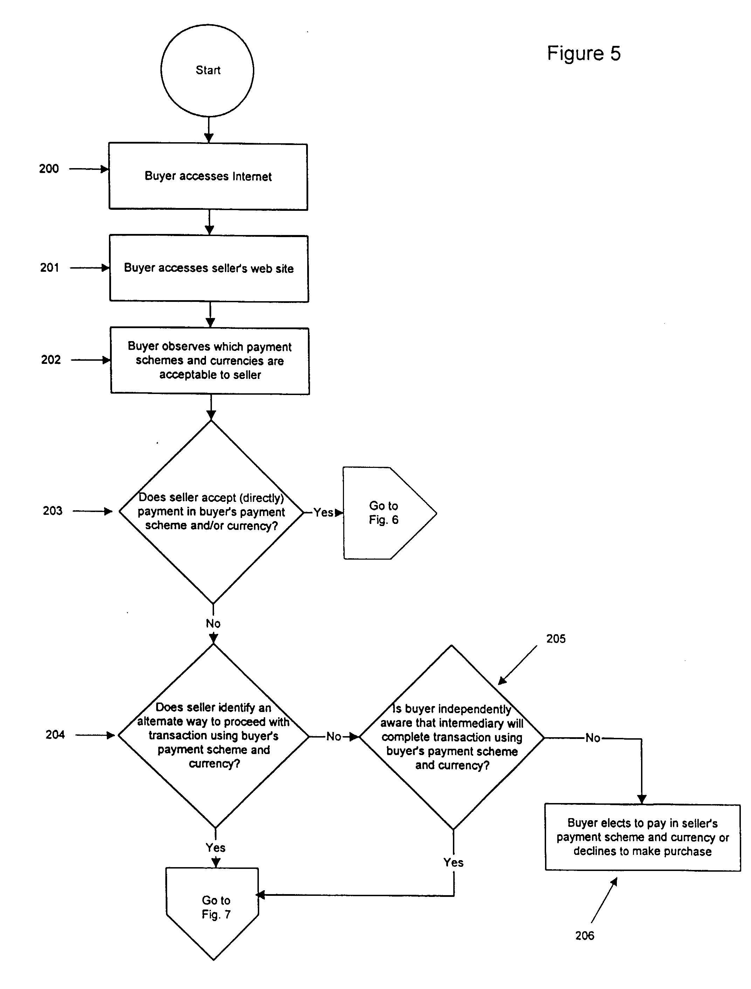

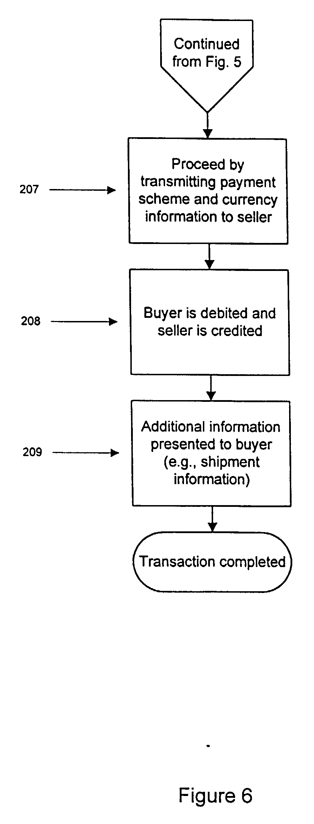

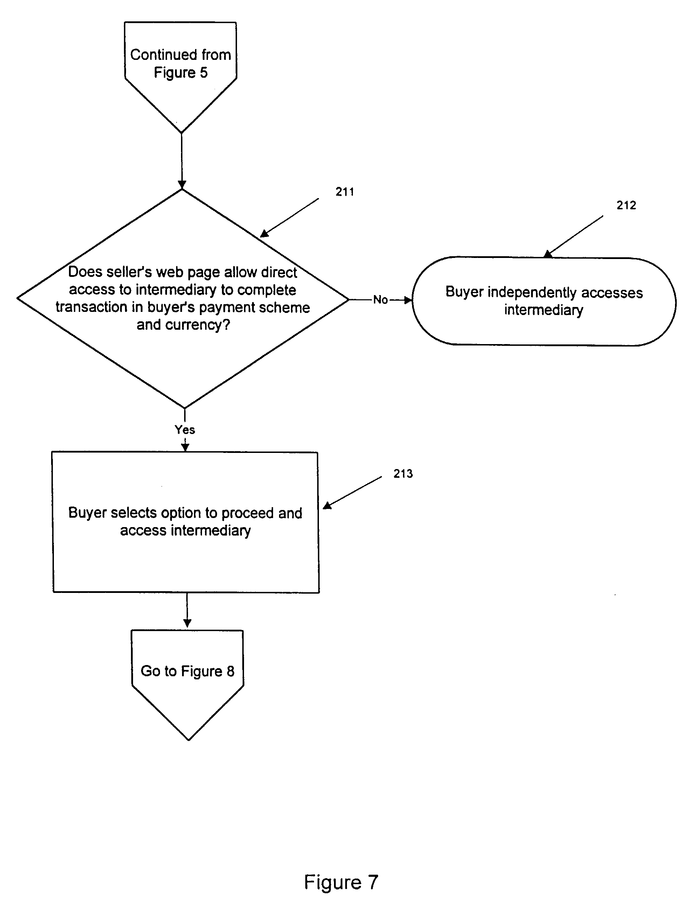

One embodiment of the present invention may entail the following process when a buyer is at a PC and wishes to make a purchase over the internet (see FIG. 5). The buyer will access the internet 200 and then proceed to the seller's web page 201. Once the buyer has made a decision to make a purchase, the buyer observes which payment schemes and currencies are acceptable to seller 202. At this point, the buyer will determine if the seller will directly accept payment in the buyer's payment scheme and/or currency 203. If not, the buyer will see from the web page whether the seller has identified an alternative way that a buyer may make payment using the buyer's payment scheme and currency 204.

If not, the next step is to assess whether the buyer is independently aware of another means to complete the transaction in the buyer's payment scheme and currency 205. For instance, the buyer may be aware of an intermediary to complete the transaction. If not, the buyer may then elect to proceed with the transaction by using a payment scheme and currency that are acceptable to the seller, or simply, the buyer may decline to make the purchase 206.

If the seller accepts the buyer's payment scheme directly, then the buyer will proceed by transmitting the payment scheme and currency information directly to the seller's web site (see FIG. 6, element 207). The buyer is then debited and seller is credited 208. The web site at this point may still present additional information that is desirable to buyer 209. The buyer then exits the web site and the transaction completed.

If the seller identifies an alternate way to proceed with the transaction using buyer's payment scheme and currency 204, then the next step is to assess whether access is directly provided to an intermediary (see FIG. 7, element 211). If not, the buyer can independently access an intermediary 212. The buyer will then proceed to complete the transaction.

If the seller allows for direct access to an intermediary to complete the transaction in the buyer's payment scheme and currency 211, the buyer then selects the option to proceed and accesses the intermediary 213. The buyer in this embodiment would then have a screen to review the relevant information (FIG. 8, element 214) in order to select the buyer's desired payment scheme and currency 215. In this embodiment, the buyer is then presented, on his screen, with other relevant supplemental information 216 on matters such as shipment, payment terms, etc. The buyer then authorizes the transaction 217 which leads to a successful completion of the transaction 218.

Embodiments of the present invention have now been described in fulfillment of the above objects. It will be appreciated that these examples are merely illustrative of the invention. Many variations and modifications will be apparent to those skilled in the art.

## Claims

1. A method for conducting an electronic transaction, comprising:
receiving a payor value type selection for the electronic transaction from a payor;
determining a payee value type selection and a payee payment;
calculating a payor payment equivalent to the payee payment;
receiving the calculated payor payment from the payor; and
paying the payee payment to the payee.

2. The method for conducting the electronic transaction of claim 1, wherein the electronic transaction occurs via a network.

3. The method for conducting the electronic transaction of claim 2, wherein the network is the internet.

4. The method for conducting the electronic transaction of claim 1, wherein the value type selection is a micropayment scheme.

5. The method for conducting the electronic transaction of claim 1, wherein the payor value type selection includes one from the group consisting of Mondex, eCash, Visa Cash, and Cyber Coin.

6. The method for conducting the electronic transaction of claim 1, wherein the payor value type selection includes currency.

7. The method for conducting the electronic transaction of claim 1, wherein the payor value type selection includes frequent flier miles.

8. The method for conducting the electronic transaction of claim 1, wherein the payor value type selection includes loyalty points.

9. The method for conducting the electronic transaction of claim 1, wherein the payee value type selection includes one from the group consisting of Mondex, eCash, Visa Cash, and Cyber Coin.

10. The method for conducting the electronic transaction of claim 1, wherein the payee value type selection includes currency.

11. The method for conducting the electronic transaction of claim 1, wherein the payee value type selection includes frequent flier miles.

12. The method for conducting the electronic transaction of claim 1, wherein the payee value type selection includes loyalty points.

13. The method for conducting the electronic transaction of claim 1, wherein calculating the payee payment includes converting the payor payment to an equivalent payee payment.

14. The method for conducting the electronic transaction of claim 1, wherein the form of payment are coupons.

15. The method for conducting the electronic transaction of claim 2, wherein the network is the internet.

16. The method for conducting the electronic transaction of claim 13, wherein converting the payor payment to an equivalent payee payment includes:
accessing a database of conversion values; and
determining the equivalent payee payment using the database of conversion values.

17. The method for conducting the electronic transaction of claim 1, wherein the electronic transaction is conducted by an intermediary.

18. The method for conducting the electronic transaction of claim 1, wherein determining a payee value type selection includes receiving the payee value type selection from the payee.

19. The method for conducting the electronic transaction of claim 1, wherein determining a payee value type selection includes accessing a database of payee value type selections.

20. The method for conducting the electronic transaction of claim 1, wherein the electronic transaction includes a payment for an item.

21. The method for conducting the electronic transaction of claim 20, wherein the item comprises a good.

22. The method for conducting the electronic transaction of claim 20, wherein the item comprises a service.

23. The method for conducting the electronic transaction of claim 1, wherein the electronic transaction includes a conversion of a first value type to a second value type.

24. The method for conducting the electronic transaction of claim 23, wherein the conversion occurs only in the event of preapproval for conversion by the payee.

25. The method for conducting the electronic transaction of claim 1, wherein the electronic transaction includes foreign exchange.

26. The method for conducting the electronic transaction of claim 1, wherein receiving the calculated payor payment includes:
accessing an account for the payor in an account database; and
deducting a value from the account.

27. The method for conducting the electronic transaction of claim 1, wherein receiving the calculated payor payment includes receiving an electronic payment.

28. The method for conducting the electronic transaction of claim 27, wherein the electronic payment includes one from the group consisting of Mondex, eCash, Visa Cash, and Cyber Coin.

29. The method for conducting the electronic transaction of claim 27, wherein electronic payment includes national currency.

30. The method for conducting the electronic transaction of claim 27, wherein electronic payment includes frequent flyer miles.

31. The method for conducting the electronic transaction of claim 27, wherein electronic payment includes loyalty points.

32. The method for conducting the electronic transaction of claim 1, wherein paying the payee payment to the payee includes:
accessing an account for the payee in an account database; and
crediting a value to the account.

33. The method for conducting the electronic transaction of claim 1, wherein paying the payee payment to the payee includes receiving an electronic payment.

34. The method for conducting the electronic transaction of claim 1, further comprising:
providing options for selection of one from a plurality of payor value types; and
the payor selecting the payor value type.

35. The method for conducting the electronic transaction of claim 34, wherein the plurality of payor value types are included in a payor value types database.

36. The method for conducting the electronic transaction of claim 34, further comprising receiving from the payee an approval of the payor value type selection.

37. The method for conducting the electronic transaction of claim 1, further comprising:
providing the payor with an option to setup an account;
receiving the payor selection to setup an account; and
setting up an account for the payor.

38. The method for conducting the electronic transaction of claim 37, further comprising receiving electronic payment from the payor for crediting to the account for the payee.

39. The method for conducting the electronic transaction of claim 1, further comprising:
providing the payee with an option to setup an account;
receiving the payee selection to setup an account; and
setting up an account for the payee.

40. The method for conducting the electronic transaction of claim 39, further comprising receiving electronic payment from the payee for crediting to the account for the payee.

41. The method for conducting the electronic transaction of claim 1, wherein the electronic transaction includes receiving an input from a terminal.

42. The method for conducting the electronic transaction of claim 41, wherein the terminal comprises a personal computer.

43. A system for conducting an electronic transaction, comprising:
a first terminal receiver for receiving a payor value type selection for the electronic transaction from a payor;
a server connected to the first terminal receiver, the server including:
a calculator for calculating a payor payment equivalent to the payee payment; and
a processor for determining a payee value type selection and a payee payment and for initiating payment of the payee payment to the payee; and
a second terminal receiver connected to the server for receiving the calculated payor payment from the payor.

44. A method for conducting an electronic transaction, comprising:
receiving a value of a first value type;
receiving a selection of a second value type;
converting the value of the first value type to an equivalent value of the second value type; and
providing the equivalent value of the second value type.

45. The method for conducting the electronic transaction of claim 44, wherein converting the value to an equivalent value of the second value type includes adding a transaction cost.
